# EUROPEAN PATENT SPECIFICATION

(11) **EP 2 701 132 B1**
(45) Date of publication and mention of the grant of the patent: **04.07.2018**
(21) Application number: 12181611.0
(22) Date of filing: 23.08.2012
(51) Int. Cl.: G08B 25/04, G08B 29/18, H04L 12/40

(54) **Alarm device having a local energy storage unit, and bus-based alarm system**
Alarmvorrichtung mit einer lokalen Energiespeichereinheit und busbasiertes Alarmsystem
Dispositif d'alarme comprenant une unité de stockage d'énergie local et système d'alarme basé sur le bus

(43) Date of publication of application: 26.02.2014
(73) Proprietor: Novar GmbH, 41469 Neuss (DE)
(72) Inventor: Janßen, Robin, 41429 Neuss (DE); Neufert, Bert, 41429 Neuss (DE); Kümpel, Wolfgang, 41469 Neuss (DE)
(74) Representative: Henkel, Breuer & Partner

(56) References cited:
- EP-A1- 2 169 645
- EP-A1- 2 216 760
- WO-A1-2009/049949
- DE-B3-102005 037 047
- US-A1- 2012 206 257

## Description

The invention relates to a alarm device having a local energy storage unit and to a bus-based alarm system.

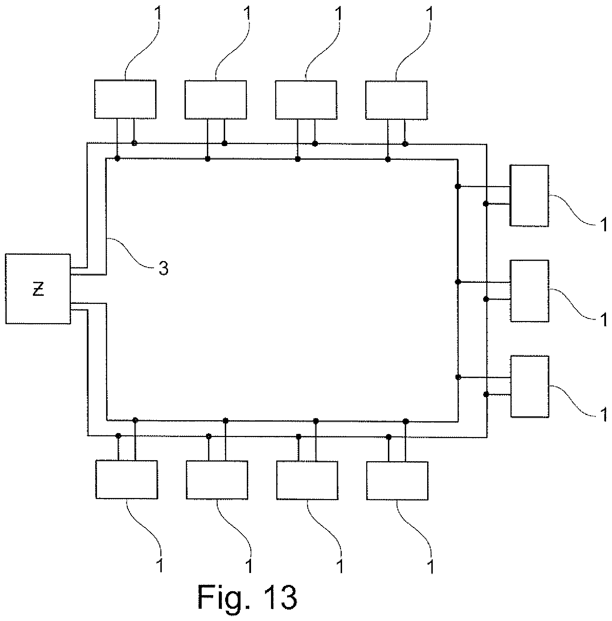

Figure 13 shows a bus-based alarm system which is known per se, a central controlling unit Z being connected to a plurality of identical or different alarm devices 1 via a bus 3. The system is configured in such a manner that the central controlling unit Z and at least some alarm devices 1 can be individually addressed via the bus and can interchange data, whether to report an alarm situation or to control individual components.

The alarm devices 1 may include smoke detectors, intrusion detectors, video cameras, fire extinguishers, electronic locks, acoustic and optical alarm transmitters etc.

For example, WO 2009/049949 A1 shows a fire alarm system having a bus to which a central controlling unit and one or more alarm devices, for example fire detectors, are connected. The bus is in the form of a loop or a ring. Disconnecting apparatuses are additionally provided or are provided as part of the detectors. In the event of a fault, for example in the event of a short circuit or a line interruption on the bus, all alarm devices are disconnected from the bus. The disconnectors now make it possible to operate the ring as two spur lines. For this purpose, one detector after the other, either in the clockwise direction or anticlockwise direction on the bus, is connected to the bus again by the central controlling unit. Only the bus section with the fault remains disconnected by the disconnectors. In order to enable this reconnection of the alarm devices, it is necessary, following disconnection from the bus, for the disconnectors to remain in operation for some time without an external power supply. Therefore, the abovementioned document proposes providing the separators with a local energy storage unit, preferably a capacitor.

The capacity of such a capacitor is limited, and provision is not made for the stored energy to be used for purposes other than the reconnection of the separators.

It should also be noted that the greater the power consumption of a alarm device in the alarm situation, the fewer subscribers can be operated since the central controlling unit provides only a certain amount of power. In addition, this available power decreases with the line length on account of the power loss of the line caused by the line resistance.

If the alarm devices also include acoustic and optical alarm transmitters which consume considerably more power than other alarm devices in the alarm situation, considerable restrictions in the number of possible alarm devices, in particular in the case of a long line, result.

It has been proposed to supply alarm devices whose power consumption exceeds a particular limit with an external voltage, for example via the normal domestic power supply system. However, this is not always possible and requires an increased amount of installation effort.

Robert Bosch GmbH offers, under the designation FNM-420U, a bus system having alarm devices which are in the form of signal transmitters, in particular loudspeakers or warning lights, and are provided with a battery. The battery is dimensioned in such a manner that it maintains operation of the signal transmitter for 30 minutes in the alarm situation if the bus is interrupted.

Assuming that the battery of a detector provides only approximately 15 minutes of alarm bridging per year and with a battery capacity of 2.6 Ah, it can be assumed that it suffices to replace the battery every 10 years. For the purpose of safety, this technology proposes checking the voltage of the battery at regular intervals by means of an internal circuit of the signal transmitter in order to transmit a report in good time to a central controlling unit u via the bus so that the battery can be replaced.

One disadvantage of these known signal transmitters is that very high demands must be imposed on the battery, both in terms of the capacity and in terms of the stability.

Further background state of the art is disclosed in EP 2 169 645 A1, US 2012/0206257A1 and DE 10 2005 037 047 B3.

The object of the invention is to provide a alarm device having a local energy storage unit and to provide a method for operating this alarm device, which subscriber/method overcomes the disadvantages of the prior art shown.

The object is achieved by a alarm device according to Claim 1 and by a bus-based alarm system according to Claim 9. The dependent claims relate to further advantageous aspects of the invention.

The invention is described below using a preferred embodiment and with reference to the accompanying figures, in which:
- Figure 1: shows a block diagram of a alarm device having a rechargeable secondary cell according to a first embodiment;
- Figure 2: shows a block diagram of a alarm device having a rechargeable secondary cell according to a second embodiment;
- Figure 3: shows the charging behavior of a rechargeable secondary cell via a constant current regulator;
- Figure 4: shows the discharging behavior of a rechargeable secondary cell through two power consuming units;
- Figure 5: shows a circuit diagram of a constant current regulator to be used according to the invention;
- Figure 6: shows a circuit diagram of a non-self-oscillating step-down switched-mode regulator which can be used as the constant current regulator for charging the rechargeable secondary cell;
- Figure 7: shows a circuit diagram of a self-oscillating step-down switched-mode regulator which can be used as the constant current regulator for charging the rechargeable secondary cell;
- Figure 8: shows a discharge circuit when no step-up switched-mode regulation needs to be carried out;
- Figure 9: shows an alternative discharge circuit;
- Figure 10: shows a step-up switched-mode regulator which can be used to discharge the rechargeable secondary cell; and
- Figure 11: shows a self-oscillating step-up switched-mode regulator which can be alternatively used to discharge the rechargeable secondary cell;
- Figure 12: shows a block diagram of a alarm device having a rechargeable secondary cell according to a third embodiment
- Figure 13: shows a block diagram of a bus-based alarm system.

The invention is explained in detail below using some preferred embodiments.

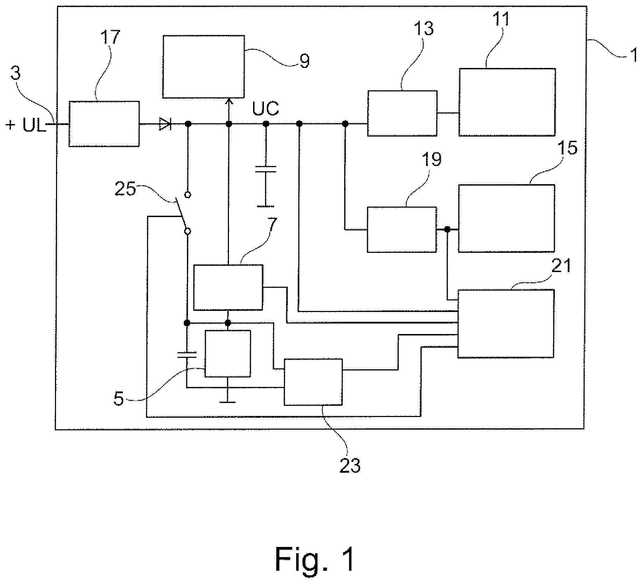

Figure 1 shows a block diagram of a alarm device 1 which is supplied with power via a bus line 3. The bus line 3 is part of a ring bus 3 (not shown any further) to which a plurality of alarm devices 1 and a central controlling unit Z for controlling the alarm devices are connected in a known manner, as also shown, by way of example, in Figure 13.

Alarm devices 1 may be simple fire detectors or else actuators, such as loudspeakers, lights, locking systems for doors and windows or the like, which are activated via the bus line in the event of a hazard, for example in the event of fire.

As stated at the outset, in such a bus system, the greater the power consumption of a alarm device in the alarm situation, the fewer subscribers respectively alarm devices can be operated. This is conventionally a problem, in particular, for acoustic and optical alarm transmitters which consume considerably more power than other alarm devices in the alarm situation.

With currently conventional known bus systems, the operating voltage is 20 to approximately 45 V and the current is less than 400 mA.

According to the invention, alarm devices 1 with a larger power consumption are given a local energy storage unit 5, for example in the form of a rechargeable secondary cell pack, with the result that additional (or the entire) energy is provided by this energy storage unit when sounding the alarm.

The configuration of the invention offers the benefit that the capacity of the battery provided in the central controlling unit Z, to cope with an emergency situation of a power loss in the central controlling unit, can be reduced considerably.

A further advantage is that the problems related to the bus lines being too "thin" to carry the necessary current is removed. If the cross section of the bus lines is small, in case of increasing the current, the loss increase drastically. However, with the distributed energy storage units 5 of the invention, there is no need to increase the current on the bus lines.

Additionally, since the charging of the energy storage units 5 can be performed at times of reduced activity on the bus 3, the small cross section of the bus lines does not represent such a problem.

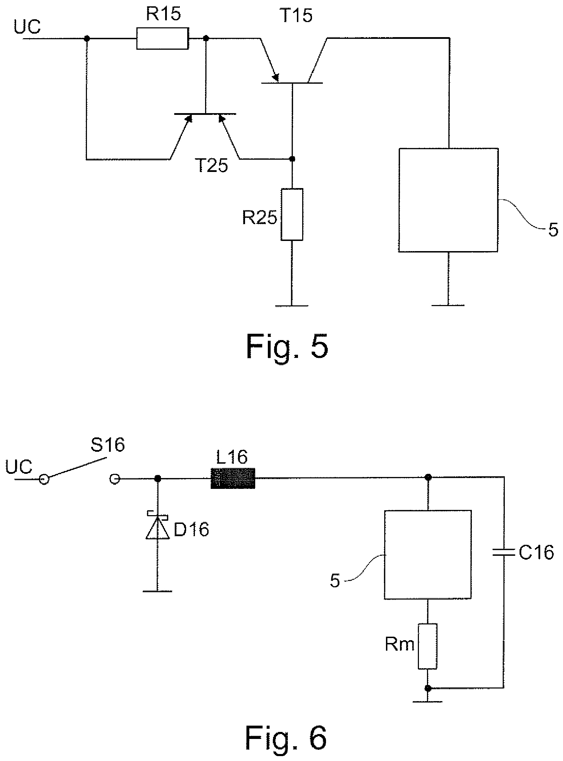

In the case of the alarm device 1 shown in Figure 1, the energy storage unit 5 is connected to the bus line 3 via a charging unit 7. The charging unit 7 is described later with reference to Figures 5, 6 and 7.

In order to protect the alarm device 1, a bus connecting unit 17, in the simplest case a current-limiting means, is provided on the input side. For this bus connecting unit 17 different approaches are feasible. E.g. it would be possible to provide the bus connecting unit 17 with three or four discrete and different settings which can be switched depending on the actual operation conditions, thus allowing a better distribution of the total current supplied through the bus 3 for the respective bus subscribers respectively alarm devices 1.

As is customary, the alarm device 1 is likewise provided with a separator circuit 9 which makes it possible to disconnect the bus 3 in the event of a short circuit or a line break. The bus system can then no longer be operated as a ring bus but rather only as two spur lines.

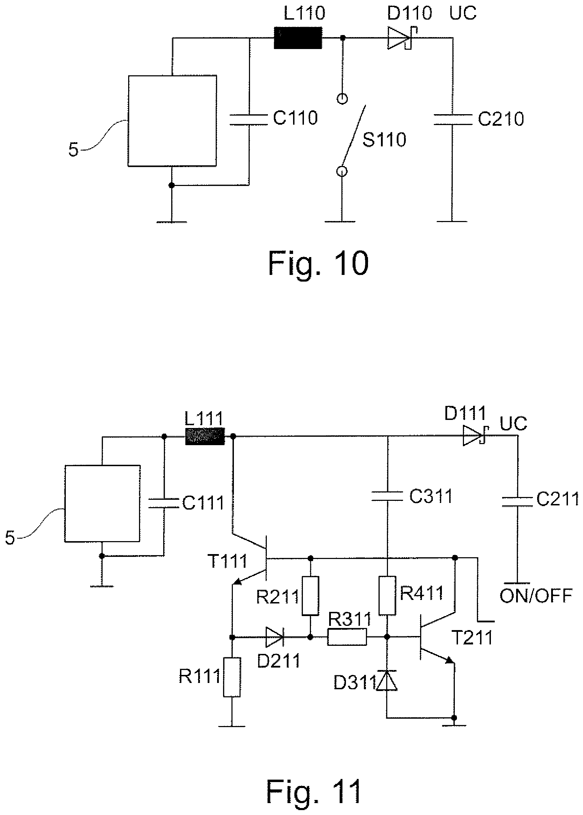

The alarm device 1 shown in Figure 1 additionally has a power consuming unit 11 or load, which is operated with a voltage above the minimum voltage of the energy storage unit 5, for example 35. Examples of such power consuming units 11 are loudspeakers, sirens, flashers and other flashing lights etc. Therefore, a voltage boosting circuit, especially a step-up voltage regulator 13, which is described later with reference to Figures 10 and 11, is assigned to this power consuming unit 11.

In Figure 1, the reference symbol 15 is used to denote a further power consuming unit which may be optionally present and is operated with a voltage below the minimum voltage of the energy storage unit, for example a fire detector. A step-down voltage converter 19 (not shown in more detail) is assigned to this unit. The voltage for operating this power consuming unit 15 may be 3.3 V, for example.

The alarm device 1 is controlled by a controller 21 which is supplied with power via the step-down voltage converter 19.

The controller 21 is connected to a charging detection unit 23 which tests the state of charge of the energy storage unit 5 and makes it possible for the controller 21 to accordingly control the charging unit 7.

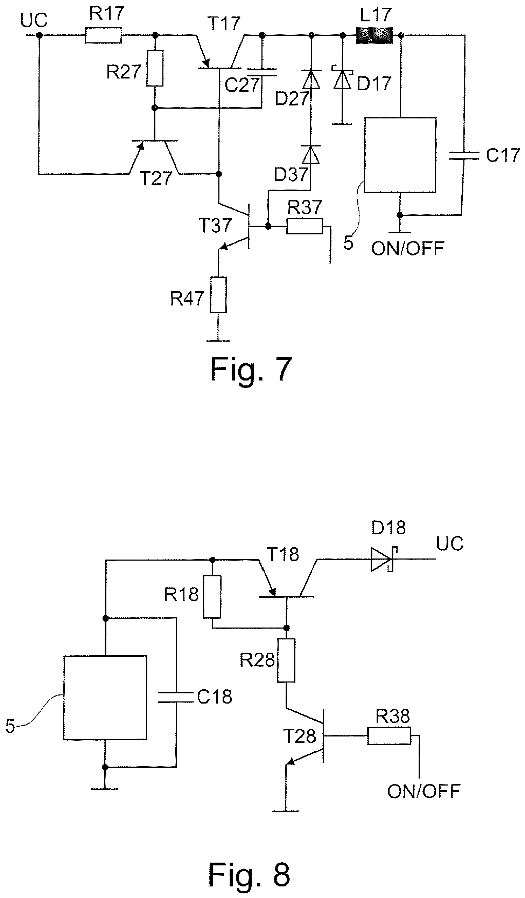

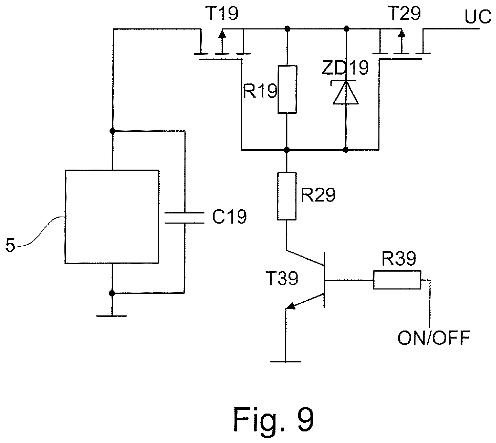

Finally, the alarm device 1 also has a switching unit 25 which connects the energy storage unit 5 to the bus line 3 when the energy from the energy storage unit 5 is required. The switching unit 25 is likewise controlled by the controller 21. Examples of suitable switching units 25 are shown in Figures 8 and 9.

The energy storage unit 5 is charged with the aid of the charging unit 7 and the controller 21. The charging unit 7 is activated and deactivated by the controller 21 when necessary. The controller 21 allows complex charging scenarios. In the preferred embodiment, the energy storage unit 5 is supplied only with a minimum charge conservation current during normal operation. In the alarm situation, when the energy from the energy storage unit 5 is needed to operate the different power consuming units 11, 15, the charging unit 7 completely switches off the charging current. After the alarm, the energy storage unit 5 is charged with a preferably preprogrammed charging cycle. The start of the charging cycle of an energy storage unit 5 of a particular alarm device 1 can be enabled by the central controlling unit Z of the bus system by the central controlling unit transmitting a corresponding command to the controller 21 of the alarm device. It may thus be useful, according to the invention, to first of all recharge the energy storage units 5 which supply a loudspeaker in the alarm situation and to recharge those energy storage units 5 which are assigned to a flasher or an escape route lighting system only when the load on the bus line 3 has fallen again after the other energy storage units 5 have been charged. It is also possible for the central controlling unit Z to control the charging of the energy storage units in such a manner that only every second or third alarm device 1 is first of all changed to the charging mode in order to thus again allow at least one emergency mode as quickly as possible.

It is also possible to first of all change all energy storage units 5 of the bus system to a minimum state of charge in a parallel manner before sequential charging according to predefined prioritization is then controlled by the central controlling unit Z in a second phase.

In the preferred embodiment shown in Figure 1, the controller 21 is connected both to the charging unit 7 and to the charging detection unit 23, with the result that the charging unit 7 is controlled via the controller 21.

The practice of configuring the charging unit 7 in such a manner that it operates independently of the controller 21, for example in a manner controlled only by the position of the switching unit 25 and the charging detection unit 23, is appropriate as an alternative here. After the switching unit 25 has been closed and opened again, the charging unit 7 would then automatically begin with the charging operation and would terminate the charging operation upon reaching the full charge on the basis of the output from the charging detection unit 23.

However, as described, it is preferred for the switching unit to temporally control the charging operation and to check the functionality of the energy storage unit.

In one embodiment of the invention, the central controlling unit can switch the energy supply for one or more alarm devices 1 back and forth between a first energy supply mode, in which the energy is supplied only via the bus 3, and a second energy supply mode, in which the energy is supplied entirely or partially from the energy storage unit, by means of a command via the bus 3. This command can be initiated, for example, when the central controlling unit detects that the current on the bus reaches a limit value.

In another embodiment of the invention, the discharging operation of the energy storage unit 5 is controlled by the controller 21 of the alarm device 1 itself. When it is detected that the bus voltage UC has undershot a particular value, the controller 21 switches the switching unit 25, with the result that UC is connected to the energy storage unit 5. The controller 21 may be configured in such a manner that it does not react to very brief voltage drops.

It goes without saying that it is possible to combine both embodiments, with the result that it is reliably possible to change over between the two energy supply modes both via the central controlling unit Z and - for example if the bus 3 is interrupted - via the switching unit.

As shown in Figure 1, the energy storage unit 5 is a replacement for the voltage "UC" of the bus, that is to say it supplies all units which are otherwise supplied by "UC" when necessary.

The supply from the bus via the bus connecting unit 17 additionally remains as long as the bus voltage is greater than the voltage of the energy storage unit or until the bus connecting unit no longer operates in terms of hardware.

The supply for the separator circuit 9 merits particular attention. This circuit is supplied from "UC" and, in a conventional embodiment with bipolar transistors or FETs, requires a minimum gate voltage, for example 3 V in the case of an FET, in order to switch. In order to obtain a sufficiently low resistance, at least 4.5 V, and preferably 10 V, are required since, when the gate is supplied with 10 V, the resistance is 25% lower than when supplied with 4.5 V. According to the invention, the voltage "UC" should not fall below 4.5 V across the energy storage unit 5 during operation.

In this embodiment, it is necessary, in particular, to provide for supplying a flashing light as the power consuming unit 15. Flashing lights are usually directly supplied with the voltage UC on the bus. Therefore, it is necessary to provide an appropriate operating voltage via the step-down converter 19 which carries out step-down conversion in the first energy supply mode only via the bus UC.

For the second energy supply mode, when UC has fallen and the energy from the energy storage unit 5 is used, the step-down converter 19 must operate as a step-up/step-down converter, which gives rise to additional outlay on circuitry.

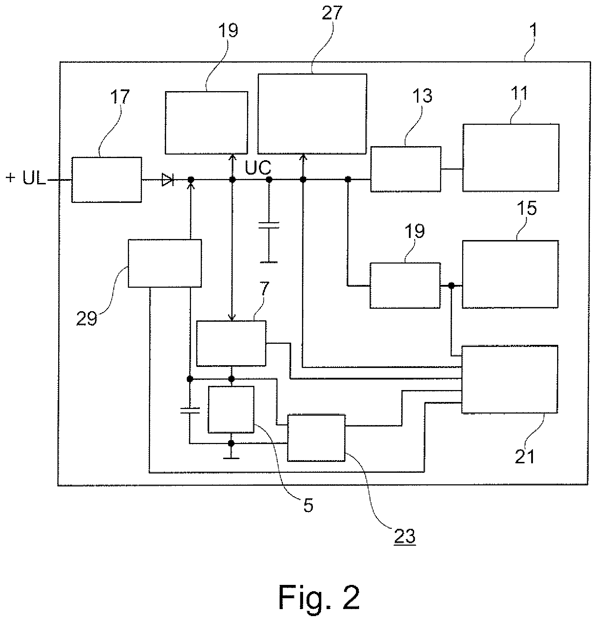

In order to circumvent this problem, Figure 2 shows an alternative embodiment. In this case, the voltage of the energy storage unit 5 can generally be transformed to a voltage of 35 V by the voltage boosting circuit 29.

In this case, the power consuming units 27, such as a flashing light, which are directly supplied with the voltage UC do not need an associated voltage converter.

In this embodiment, it is appropriate to entirely switch off the additional supply from the bus in the case of operation via the energy storage unit. The energy saved in this manner would then be available to the alarm devices without their own energy storage unit 5. For this purpose, the bus connecting unit 17 will be accordingly adapted and controlled either via the central controlling unit Z or the switching unit.

When selecting and dimensioning the energy storage unit 5, it should be kept in mind that, on the one hand, the capacity of the energy storage unit 5 is sufficiently large to ensure operation of the respective actuators over the required time but, on the other hand, the charging operation can be terminated within the time which is permissible for starting up the entire system according to the customary standards.

For the purpose of simplification, only speech alarm transmitters, speech alarm transmitters with live speech, visual alarm transmitters and combinations thereof are taken into account in the following consideration. In this case, it should be kept in mind that a relatively high power from a 3.3 V supply is required in the case of speech alarm transmitters with live speech since use is usually made of a digital signal processor (DSP) which is supplied with this operating voltage. This results in only part of the energy storage unit capacity for generating a voltage of approximately 35 V being available to other loads, for instance a flasher.

With regard to the energy storage unit, a nickel metal hydride rechargeable secondary cell is assumed for the purpose of simplification. The latter is commercially available in the form of individual cells or as a pack.

The capacity is expected to be 80 mAh for the purpose of simplification since this is a common size for NiMH cells, for example from the company VARTA.

The minimum energy storage unit voltage is primarily dependent on the minimum starting voltage of the step-down switched-mode regulators 19 used which must regulate the voltage to the supply voltage for the respective units and the controller 21. This voltage is approximately 4.5 V. This means that the minimum energy storage unit voltage must be somewhat greater since losses still occur as a result of switching units which connect and disconnect the rechargeable secondary cell.

Alternatively, a further voltage converter may be additionally used for the range of less than 4.5 V, for example a simple "ultra low drop" fixed voltage regulator which is then connected when the energy storage unit voltage falls below a particular value since the efficiency of such a regulator is relatively good in comparison with a switched-mode regulator.

In the preferred embodiment, the voltage UC can have at least 15 V and at most 45 V, and the available current downstream of the bus connecting unit 17 at UL is intended to be in the range between 0.5 and 12 mA.

When using five cells with an end-of-charge voltage of at most 1.5 V for example, the maximum end-of-charge voltage is 7.5 V.

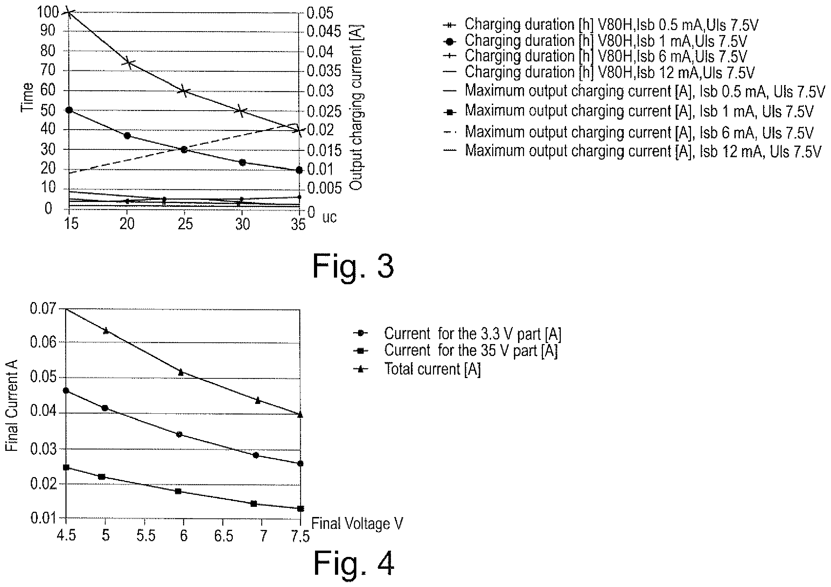

Assuming an efficiency of the charging unit 7 of 80% and an ideal charging efficiency of the energy storage unit 5, a charging duration according to Figure 3 results for an ideal 80 mAh rechargeable secondary cell.

As can be seen, the energy storage unit can be charged in somewhat more than 40 hours with a voltage UC of 35 V and a charging current of 0.5 mA.

When using five cells, the final discharge voltage should be at least 4.5 V so that a sufficient voltage reserve for operating the 3.3 V voltage regulators 19 and thus the controller 21 is still available. The maximum discharging current is 80 mA. Assuming that all switched-mode regulators used have an efficiency of 80%, the discharging behavior shown in Figure 4 results.

It can be seen that, in the case of a voltage of 7.5 V, a current of more than 15 mA is needed for the load with 35 V and a current of approximately 25 mA is needed for the power consuming unit with 3.3 V, with the result that it is possible to reliably and effectively operate a power consuming unit 11, 15 without the bus 3.

The text below describes a preferred charging method which can be used both in the embodiment according to Figure 1 and in that according to Figure 2.

The charging method should be adapted depending on the energy storage unit used. For example, NiMH rechargeable secondary cells are preferably charged with a constant current. The charging operation is terminated when the energy storage unit voltage begins to fall again (negative ΔU method).

In contrast, Li-ion rechargeable secondary cells are first of all charged with a constant current and, upon reaching the end-of-charge voltage, a changeover is made to a constant voltage. The end of the charging operation is reached when the charging current has fallen below a particular value.

In order to additionally protect against overcharging, the temperature of the rechargeable secondary cell is often measured. The charging operation is stopped when a particular temperature is exceeded. For this purpose, an additional temperature sensor may be provided in the alarm device 1, which sensor controls the charging unit 7 either via the switching unit or via a comparator.

Another protection method is switching-off after a defined time has elapsed.

Particularly in the case of small charging currents, the charging operation is often controlled only with the aid of a time controller.

Only charging methods with a constant current are considered below.

In this case, the switching unit 25 used sits between "UC" and the positive pole of the energy storage unit 5. It is also possible to use the switching unit between the negative pole and ground.

A very simple charging unit 7, but only with low efficiency, is shown in Figure 5. The maximum current available at UC can be used to charge the energy storage unit 5. In the alarm device 1, this is defined by the dimensioning of the bus connecting unit 17 which feeds UC. The charging current is set via the resistor R15. The transistor T25 regulates the base current of the transistor T15. If the voltage across R15 increases to approximately 0.7 V, T25 is switched on and T15 switches off.

Instead of the transistor T25, it is also possible to use a Zener-diode or light-emitting diode. FETs can likewise also be used instead of the bipolar transistors shown.

In order to switch the circuit on and off by means of the controller 21, it is possible to install a further transistor which connects the resistor R25 to ground.

Since pulse charging for rechargeable batteries is better for the service life than trickle charging, this circuit may also be designed for a larger current and may be operated, for example, in a pulsed manner such that it is ON for 1 s and OFF for 9 s (depending on UC).

Since the energy storage unit voltage is lower than the voltage UC, the use of a step-down switched-mode regulator for charging is appropriate, as shown in Figure 6. For this purpose, in the simplest form, an LC circuit having a coil L16 and a capacitor C16 is connected together with a resistor Rm to the energy storage unit 5 and is clocked via a switching unit S16. The energy storage unit 5 can thus be charged with a larger current than is provided by the bus connecting unit 17.

The charging unit 7 can either be controlled by a controller 21 (non-self-oscillating), as shown in Figure 6, or it oscillates itself and is only switched on and off by the controller 21, as shown in Figure 7. The self-oscillator is appropriate whenever the controller 21 is not able to control, for example when a PWM output for control is no longer free. In addition, the self-oscillator can be integrated into existing systems in a simpler manner.

In the case of a non-self-oscillating step-down converter, the controller 21 controls the switch S16, for example via a PWM output. The switch S16 may be a bipolar transistor or an FET. In addition, the voltages UC, the energy storage unit voltage Urb and the voltage URm must be measured. The charging current can be calculated using URm and the value of the resistor Rm. Alternatively, it can also be calculated using UC, Urb, the value of L16 and the period of time in which S16 is operated. The resistance Rm is less than 1 ohm in order to avoid too much voltage being dropped during charging/discharging. Another amplifier is possibly additionally required so that the controller 21 can measure the voltage across Rm.

In a simple self-oscillator, as shown in Figure 7, the constant current charging regulator from Figure 5 and the step-down switched-mode regulator from Figure 6 are combined. Provision is additionally made of a further resistor R27 and a capacitor C27 whose charging/discharging ensures the oscillating behavior of the circuit. Figure 7 likewise shows a further transistor T37 whose gate connection receives the ON/OFF signal from the controller 21 and which then switches the transistor T17. The ON/OFF signal is also delivered to the coil L17 via the diodes D37 and D27. A diode D17 is provided between the the coil 17 and ground.

The controller 21 must only switch the self-oscillating switched-mode regulator on and off and measure the energy storage unit voltage. The charging current is indirectly set via the resistor R17 (peak current of the coil). After being switched on, the circuit charges the coil L17 until the voltage across R17 exceeds approximately 0.6 to 0.7 V. The transistor T17 is then switched off by the transistor T27. The diodes D27 and D37 additionally switch off the transistor T37 (the node at the collector of T17 falls below 0 V at that moment). Thus a reactivation of T37 is prevented during the discharge of the coil L17. The coil L17 then charges the capacitor C17 and the rechargeable secondary cell. As soon as the coil has been discharged, T37 is driven again and the operation begins from the outset. The diode D37 can be replaced by a small resistor, if desired.

Figure 8 shows an example of the switching unit 25 for controlling the discharging of the energy storage unit 5. In this case, the energy storage unit 5 is connected to UC with the aid of a transistor T18 and a diode D18. The disadvantage is the voltage drop across the diode D18. Without the diode, however, current can flow back into the energy storage unit during normal operation since T18 does not switch off cleanly if the voltage across the collector is greater than the voltage across the emitter. T18 may also be an FET. Current would then flow via the parasitic diode of the FET in the switched-off state without an additional diode.

In order to keep the voltage drop of the switch low, Figure 9 proposes using two FETs which are connected in series. This configuration conducts the current in both directions. In the switched-off state, this switch switches off completely.

In the case of incorrect operation, for instance when the energy storage unit is connected even though the alarm device 1 has an adequate supply, and in the case of voltage overshoots, for example switching off a power consuming unit, that is to say whenever UC is greater than the voltage of the energy storage unit, current flows into the energy storage unit.

In order to avoid this, it is advantageous to measure the voltage of the energy storage unit 5 and the voltage UC, that is to say whenever UC is greater than the voltage of the energy storage unit, the switching unit 25 is switched off. If the switching unit is sufficiently fast, it can undertake this task. Alternatively, provision may be made of a differential amplifier which continuously compares these two voltages.

The voltage UC is generated from the energy storage unit voltage (for example 35 V) with the aid of the voltage boosting circuit 13. This voltage boosting circuit 13, which can be formed by a switched-mode regulator, can be controlled again by the controller 21 or oscillates itself. Figures 10 and 11 show examples of a non-self-oscillating switched-mode regulator and a self-oscillating switched-mode regulator.

As shown in Figure 10, a coil L110 and a capacitor C110, in the form of a resonant circuit, are connected to the energy storage unit 5. The voltage UC is provided via a switch S110 and a diode D110. A capacitor C210 is additionally connected in parallel with the switch S110.

The self-oscillating step-up switched-mode regulator in Figure 11 has, instead of the switch S110, a resonant circuit whose oscillating behavior is determined by a capacitor C311. The switching operation itself is carried out via the transistors T111 and T211.

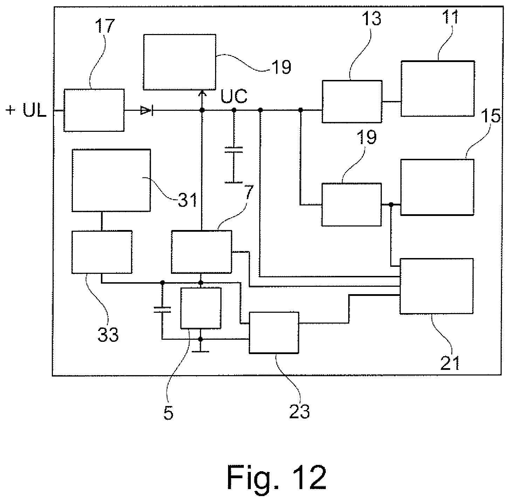

Figure 12 shows a third preferred embodiment of the invention. The main difference between the embodiment of Figure 1 and that of figure 12 is that in Figure 12 an additional power consuming unit 31 is provided, which is connected via a voltage converter 33 with an output of the energy storage unit 5. This power consuming unit 31 is not connected so as to receive power through the bus 3.

Although the embodiments have been shown with different power consuming units 11, 15 or 31, it is obvious that a single alarm device might have only one of these power consuming units, either connected with the bus 3 via a voltage boosting circuit 29, or connected with the bus 3 via a step-down voltage converter 19, or connected with the energy storage unit 5 via suitable voltage converter 33. Arbitrary combinations of these power consuming units may be provided with a respective alarm device at need.

Although the invention has been described using the above embodiments, it is obvious that it is not restricted thereto. In particular, a wide variety of alarm devices 1 can be provided on the bus system. It is also possible to hierarchically construct the bus system by providing control sub-centers in the bus, from which ring buses or spur lines again leave.

In a further modification of the invention, provision may be made for only a special power consuming unit to be supplied from the rechargeable secondary cell (for example a flashing light). The discharge circuit of the individual alarm devices 1 may be different depending on the product. In contrast, the charging unit may be identical.

It is also possible for the central controlling unit to control the charging of entire groups of alarm devices, types or individually addressed alarm devices. The parameters of the charging method may be accordingly assigned via customer data. It is also possible to dynamically adapt the parameters on the basis of the bus load/bus utilization (for example low line voltage as a result of high communication/protocol occurrence).

Switching frequencies of between 10 kHz and 100 kHz regularly occur in the switched-mode regulators, irrespective of whether or not they are self-oscillating.

In the MCU-controlled regulator, the frequency also depends on the available PWM speed of the microprocessor 21. The losses generally increase when the frequency increases. The coil size is between 1 mH and 10 mH in the step-down regulator and is between 100 µH and 1 mH in the step-up regulator.

An IC (or partially ICs) may also be used in the step-up regulator. Frequencies of greater than 100 kHz would then also be conceivable, with the advantage of smaller components, for example the coil. This is also possible for the step-down regulator when taking into account the dielectric strength.

## Claims

1. An alarm device for a bus connected alarm system comprising:
a bus connection unit (17) for connecting the alarm device with a bus (3) for supplying control signals and an electric power;
a power consuming unit (11, 15);
a controller (21) for controlling the operation of the alarm device (1) based on the control signals; the alarm device further comprising
an energy storage unit (5) for storing electrical energy;
a switching unit (25) for switching between a first power supply mode, where power is supplied through the bus (3) alone, to a second power supply mode where at least part of the power is supplied through the energy storage unit (5);
wherein the controller (21) is configured to control the switching unit (25) so as to switch to the second power supply mode, when the power consuming unit (11, 15) is activated.

2. The alarm device according to claim 1, **characterized by** further comprising:
a charging unit (7) for charging the energy storage unit (5) using the electrical power supplied through the bus (3);
wherein the charging unit (7) is controlled by the controller (21).

3. The alarm device according to claim 2, **characterized by** further comprising:
a voltage boosting circuit (29, 13) for boosting a voltage output by the energy storage unit (5) to an operation voltage of the power consuming unit (11).

4. The alarm device according to claim 2, **characterized by** further comprising:
a step-down voltage converter (19) for converting current voltage supplied through the bus (3) into a charging voltage for the energy storage unit (5) or an operating voltage for the power consuming unit (15).

5. The alarm device according to claim 2, **characterized by** further comprising:
charging detection unit (23) for detecting a charging state of the energy storage unit (5), wherein the controller (21) is configured to control the charging operation of the energy storage unit (5) depending on the charging state.

6. The alarm device according to claim 5, **characterized in that** the controller (21) is configured to provide at least three different charging operations including:
a maintaining operation for maintaining the charging level of the energy storage unit (5);
a regular operation for charging the energy storage unit (5) with a intermediate charging current;
a rapid charging operation for charging the energy storage unit (5) with a high charging current.

7. The alarm device according to claim 1, **characterized by** further comprising:
a bus monitoring unit (17) for monitoring the connection state with the bus (3) in order to detect a bus failure and for communicating the monitoring result to the controller (21);
a signaling unit for signaling the bus failure by means of at least one of an acoustical and optical signal.

8. The alarm device according to claim 1, **characterized in that** the power consuming unit (11, 15) comprises a unit for outputting at least one of an acoustical and an optical alarm.

9. A bus connected alarm system comprising:
a central controlling unit (Z) providing control signals and an electric power;
a bus (3) connected with the central controlling unit (Z) for transmitting the control signals and the electric power;
a plurality of alarm devices (1) connected to the bus (3) and including a bus connection unit (17) receiving the control signals and the electric power, a power consuming unit (11, 15), a controller (21) for controlling the operation of the alarm device based on the control signals from the central controlling unit (Z); wherein at least one of the alarm devices (1) further comprises an energy storage unit (5) for storing electrical energy, a switching unit (25) for switching between a first power supply mode, where power is supplied through the bus (3) alone, to a second power supply mode, where power is supplied at least in part through the energy storage unit (5), wherein the controller (21) is configured to control the switching unit (25) so as to supply power through the energy storage unit (5) when the power consuming unit (11, 15) is activated.

10. The bus connected alarm system according to claim 9, **characterized in that** each of the alarm devices (1) comprises a charging unit (7) for charging the energy storage unit (5) using the electrical power supplied through the bus (3) and a charging detection unit (23) for detecting a charging state of the energy storage unit (5), the alarm device (1) being further configured to be individually addressable through the bus (3), so as to enable a one-to-one communication between the central control unit (Z) and each alarm device (1);
wherein the alarm devices (1) are configured to communication the charging state of their respective energy storage unit (5) to the central control unit (Z);
and wherein the central control unit (Z) is configured to control the charging operations of the energy storage units (5) of the respective alarm devices (1) based on at least one of:
the charging states of the energy storage units (5);
the present power consumption of the entire alarm system; and
a predefined priority order for charging.

11. The bus connected alarm system according to claim 9, **characterized in that** the controllers (21) of the alarm devices (1) are configured to provide at least three different charging operations including:
a maintaining operation for maintaining the charging level of the energy storage unit (5);
a regular operation for charging the energy storage unit (5) with a intermediate charging current;
a rapid charging operation for charging the energy storage unit (5) with a high charging current;
wherein the respective charging operation is determined by central control unit (Z).

12. The bus connected alarm system according to claim 9, **characterized in that** the bus (3) is configured as a closed loop.

13. The bus connected alarm system according to claim 9, **characterized in that** the bus (3) is further connected with at least one of a smoke detector, an intrusion detector, a video camera, a fire extinguishing unit and an electronic lock.

## Patentansprüche

1. Eine Alarmvorrichtung für ein Bus-verbundenes Alarmsystem, die umfasst:
eine Busverbindungseinheit (17) für ein Verbinden der Alarmvorrichtung mit einem Bus (3) für ein Zuführen von Steuersignalen und elektrischer Leistung,
eine Leistungsverbrauchseinheit (11, 15);
eine Steuerung (21) für ein Steuern des Betriebs der Alarmvorrichtung (1) basierend auf den Steuersignalen;
wobei die Alarmvorrichtung ferner umfasst:
eine Energiespeichereinheit (5) für ein Speichern elektrischer Energie,
eine Umschalteinheit (25) für ein Umschalten zwischen einem ersten Leistungszuführmodus, in dem Leistung nur durch den Bus zugeführt wird, zu einem zweiten Leistungszuführmodus, in dem zumindest ein Teil der Leistung durch die Energiespeichereinheit (5) zugeführt wird;
wobei die Steuerung (21) ausgestaltet ist, um die Umschalteinheit (25) so zu steuern, dass sie zu dem zweiten Leistungszuführmodus umschaltet, wenn die Leistungsverbrauchseinheit (11, 15) aktiviert ist.

2. Die Alarmvorrichtung gemäß Anspruch 1, **dadurch gekennzeichnet, dass** sie ferner umfasst:
eine Ladeeinheit (7) für ein Laden der Energiespeichereinheit (5) durch Verwenden der elektrischen Leistung, die durch den Bus (3) zugeführt wird;
wobei die Ladeeinheit (7) durch die Steuerung (21) gesteuert ist.

3. Die Alarmvorrichtung gemäß Anspruch 2, **dadurch gekennzeichnet, dass** sie ferner umfasst:
eine Spannungserhöhungsschaltung (29, 13) für ein Erhöhen einer Spannungsausgabe durch die Energiespeichereinheit (5) auf eine Betriebsspannung der Leistungsverbrauchseinheit (11).

4. Die Alarmvorrichtung gemäß Anspruch 2, **dadurch gekennzeichnet, dass** sie ferner umfasst:
einen Abwärtsspannungswandler (19) für ein Wandeln einer aktuellen Spannung, die durch den Bus (3) zugeführt wird, in eine Ladespannung für die Energiespeichereinheit (5) oder eine Betriebsspannung für die Leistungsverbrauchseinheit (15) .

5. Die Alarmvorrichtung gemäß Anspruch 2, **dadurch gekennzeichnet, dass** sie ferner umfasst:
eine Ladungserfassungseinheit (23) für ein Erfassen eines Ladezustands der Energiespeichereinheit (5), wobei die Steuerung (21) ausgestaltet ist, um den Ladebetrieb der Energiespeichereinheit (5) abhängig von dem Ladezustand zu steuern.

6. Die Alarmvorrichtung gemäß Anspruch 5, **dadurch gekennzeichnet, dass** die Steuerung (21) ausgestaltet ist, um zumindest drei verschiedene Ladebetriebe bereitzustellen, die umfassen:
einen Haltebetrieb für ein Halten des Ladelevels der Energiespeichereinheit (5);
einen Normalbetrieb für ein Laden der Energiespeichereinheit (5) mit einem Zwischenladestrom;
einen Schnellladebetrieb für ein Laden der Energiespeichereinheit (5) mit einem hohen Ladestrom.

7. Die Alarmvorrichtung gemäß Anspruch 1, **dadurch gekennzeichnet, dass** sie ferner umfasst:
eine Busüberwachungseinheit (17) für ein Überwachen des Verbindungszustands mit dem Bus (3), um einen Busfehler zu erfassen, und für ein Kommunizieren des Überwachungsergebnisses zu der Steuerung (21);
eine Signalisiereinheit für ein Signalisieren des Busfehlers mittels eines akustischen und/oder optischen Signals.

8. Die Alarmvorrichtung gemäß Anspruch 1, **dadurch gekennzeichnet, dass** die Leistungsverbrauchseinheit (11, 15) eine Einheit für ein Ausgeben eines akustischen und/oder optischen Alarms umfasst.

9. Ein Bus-verbundenes Alarmsystem, das umfasst:
eine zentrale Steuereinheit (Z), die Steuersignale und eine elektrische Leistung bereitstellt;
einen Bus (3), der mit der zentralen Steuereinheit (Z) für ein Übertragen der Steuersignale und der elektrischen Leistung verbunden ist;
eine Mehrzahl von Alarmvorrichtungen (1), die mit dem Bus (3) verbunden sind und eine Busverbindungseinheit (17) umfassen, die die Steuersignale und die elektrische Leistung erhält, eine Leistungsverbrauchseinheit (11, 15), eine Steuerung (21) für ein Steuern des Betriebs der Alarmvorrichtung basierend auf den Steuersignalen von der zentralen Steuereinheit (Z);
wobei zumindest eine der Alarmvorrichtungen (1) ferner eine Speichereinheit (5) für ein Speichern elektrischer Energie, eine Umschalteinheit (25) für ein Umschalten zwischen einem ersten Leistungszuführmodus, in dem Leistung nur durch den Bus (3) zugeführt wird, zu einem zweiten Leistungszuführmodus, in dem Leistung zumindest teilweise durch die Energiespeichereinheit (5) zugeführt wird, umfasst, wobei die Steuerung (21) ausgestaltet ist, um die Umschalteinheit (25) so zu steuern, dass sie Leistung durch die Energiespeichereinheit (5) zuführt, wenn die Leistungsverbrauchseinheit (11, 15) aktiviert ist.

10. Das Bus-verbundene Alarmsystem gemäß Anspruch 9, **dadurch gekennzeichnet, dass** die Alarmvorrichtungen (1) eine Ladeeinheit (7) für ein Laden der Energiespeichereinheit (5) durch Verwenden der elektrischen Leistung, die durch den Bus (3) zugeführt wird, und eine Ladeerfassungseinheit (23) für ein Erfassen eines Ladezustands der Energiespeichereinheit (5) umfassen, wobei die Alarmvorrichtung (1) ferner ausgestaltet ist, um durch den Bus (3) individuell adressierbar zu sein, sodass eine eins-zu-eins Kommunikation zwischen der zentralen Steuereinheit (Z) und jeder Alarmvorrichtung (1) möglich ist;
wobei die Alarmvorrichtungen (1) ausgestaltet sind, um den Ladezustand ihrer jeweiligen Energiespeichereinheit (5) zu der zentralen Steuereinheit (Z) zu kommunizieren;
und wobei die zentrale Steuereinheit (Z) ausgestaltet ist, um die Ladebedienungen der Energiespeichereinheit (5) der jeweiligen Alarmvorrichtungen (1) basierend auf zumindest einem von den folgenden zu steuern:
den Ladezuständen der Energiespeichereinheiten (5);
dem aktuellen Leistungsverbrauch des gesamten Alarmsystems; und
einer vordefinierten Prioritätsreihenfolge für ein Laden.

11. Das Bus-verbundene Alarmsystem gemäß Anspruch 9, **dadurch gekennzeichnet, dass** die Steuerungen (21) der Alarmvorrichtungen (1) ausgestaltet sind, um zumindest drei verschiedene Ladebetriebe bereitzustellen, die umfassen:
einen Haltebetrieb für ein Halten des Ladelevels der Energiespeichereinheit (5);
einen Normalbetrieb für ein Laden der Energiespeichereinheit (5) mit einem Zwischenladestrom;
einen Schnellladebetrieb für ein Laden der Energiespeichereinheit (5) mit einem hohen Ladestrom;
wobei der jeweilige Ladebetrieb durch eine zentrale Steuereinheit (Z) bestimmt wird.

12. Das Bus-verbundene Alarmsystem gemäß Anspruch 9, **dadurch gekennzeichnet, dass** der Bus (3) als eine geschlossene Schleife ausgestaltet ist.

13. Das Bus-verbundene Alarmsystem gemäß Anspruch 9, **dadurch gekennzeichnet, dass** der Bus (3) ferner mit einem Raucherfasser, einem Störungs- bzw. Einbruchserfasser, einer Videokamera, einer Feuerlöscheinheit und/oder einem elektronischen Schloss verbunden ist.

## Revendications

1. Dispositif d'alarme pour un système d'alarme connecté à un bus comprenant :
une unité de connexion de bus (17) pour connecter le dispositif d'alarme à un bus (3) pour fournir des signaux de commande et une puissance électrique ;
une unité de consommation de puissance (11, 15) ;
un dispositif de commande (21) pour commander le fonctionnement du dispositif d'alarme (1) d'après les signaux de commande ;
le dispositif d'alarme comprenant en outre
une unité de stockage d'énergie (5) pour stocker de l'énergie électrique ;
une unité de commutation (25) pour commuter entre un premier mode d'alimentation de puissance, où une puissance est fournie par l'intermédiaire du bus (3) seul, à un second mode d'alimentation de puissance où au moins une partie de la puissance est fournie par l'intermédiaire de l'unité de stockage d'énergie (5) ;
dans lequel le dispositif de commande (21) est configuré pour commander l'unité de commutation (25) de façon à commuter au second mode d'alimentation de puissance, lorsque l'unité de consommation de puissance (11, 15) est activée.

2. Dispositif d'alarme selon la revendication 1, **caractérisé en ce qu'**il comprend en outre :
une unité de charge (7) pour charger l'unité de stockage d'énergie (5) à l'aide de la puissance électrique fournie par l'intermédiaire du bus (3) ;
dans lequel l'unité de charge (7) est commandée par le dispositif de commande (21).

3. Dispositif d'alarme selon la revendication 2, **caractérisé en ce qu'**il comprend en outre :
un circuit de survoltage (29, 13) pour survolter une tension fournie en sortie par l'unité de stockage d'énergie (5) à une tension de fonctionnement de l'unité de consommation de puissance (11).

4. Dispositif d'alarme selon la revendication 2, **caractérisé en ce qu'**il comprend en outre :
un convertisseur abaisseur de tension (19) pour convertir une tension actuelle fournie par l'intermédiaire du bus (3) en une tension de charge pour l'unité de stockage d'énergie (5) ou une tension de fonctionnement pour l'unité de consommation de puissance (15).

5. Dispositif d'alarme selon la revendication 2, **caractérisé en ce qu'**il comprend en outre :
une unité de détection de charge (23) pour détecter un état de charge de l'unité de stockage d'énergie (5), dans lequel le dispositif de commande (21) est configuré pour commander l'opération de charge de l'unité de stockage d'énergie (5) selon l'état de charge.

6. Dispositif d'alarme selon la revendication 5, **caractérisé en ce que** le dispositif de commande (21) est configuré pour fournir au moins trois opérations de charge différentes comportant :
une opération de conservation pour conserver le niveau de charge de l'unité de stockage d'énergie (5) ;
une opération régulière pour charger l'unité de stockage d'énergie (5) avec un courant de charge intermédiaire ;
une opération de charge rapide pour charger l'unité de stockage d'énergie (5) avec un courant de charge élevé.

7. Dispositif d'alarme selon la revendication 1, **caractérisé en ce qu'**il comprend en outre :
une unité de surveillance de bus (17) pour surveiller l'état de connexion avec le bus (3) afin de détecter une défaillance de bus et pour communiquer le résultat de surveillance au dispositif de commande (21) ;
une unité de signalisation pour signaler la défaillance de bus au moyen d'au moins l'un d'un signal acoustique et optique.

8. Dispositif d'alarme selon la revendication 1, **caractérisé en ce que** l'unité de consommation de puissance (11, 15) comprend une unité pour fournir en sortie au moins l'une d'une alarme acoustique et optique.

9. Système d'alarme connecté à un bus comprenant :
une unité centrale de commande (Z) fournissant des signaux de commande et une puissance électrique ;
un bus (3) connecté à l'unité centrale de commande (Z) pour transmettre les signaux de commande et la puissance électrique ;
une pluralité de dispositifs d'alarme (1) connectés au bus (3) et comportant une unité de connexion de bus (17) recevant les signaux de commande et la puissance électrique, une unité de consommation de puissance (11, 15), un dispositif de commande (21) pour commander le fonctionnement du dispositif d'alarme d'après les signaux de commande provenant de l'unité centrale de commande (Z) ;
dans lequel
au moins l'un des dispositifs d'alarme (1) comprend en outre une unité de stockage d'énergie (5) pour stocker de l'énergie électrique, une unité de commutation (25) pour commuter entre un premier mode d'alimentation de puissance, où la puissance est fournie par l'intermédiaire du bus (3) seul, à un second mode d'alimentation de puissance, où la puissance est fournie au moins en partie par l'intermédiaire de l'unité de stockage d'énergie (5), dans lequel le dispositif de commande (21) est configuré pour commander l'unité de commutation (25) de façon à fournir la puissance par l'intermédiaire de l'unité de stockage d'énergie (5) lorsque l'unité de consommation de puissance (11, 15) est activée.

10. Système d'alarme connecté à un bus selon la revendication 9, **caractérisé en ce que** chacun des dispositifs d'alarme (1) comprend une unité de charge (7) pour charger l'unité de stockage d'énergie (5) à l'aide de la puissance électrique fournie par l'intermédiaire du bus (3) et une unité de détection de charge (23) pour détecter un état de charge de l'unité de stockage d'énergie (5), le dispositif d'alarme (1) étant en outre configuré pour être adressable individuellement par l'intermédiaire du bus (3), de façon à permettre une communication bi-univoque entre l'unité centrale de commande (Z) et chaque dispositif d'alarme (1) ;
dans lequel les dispositifs d'alarme (1) sont configurés pour communiquer l'état de charge de leur unité de stockage d'énergie (5) respective à l'unité centrale de commande (Z) ;
et dans lequel l'unité centrale de commande (Z) est configurée pour commander les opérations de charge des unités de stockage d'énergie (5) des dispositifs d'alarme (1) respectifs d'après au moins l'un parmi :
les états de charge des unités de stockage d'énergie (5) ;
la consommation de puissance actuelle du système d'alarme entier ; et
un ordre de priorité prédéfini de charge.

11. Système d'alarme connecté à un bus selon la revendication 9, **caractérisé en ce que** les dispositifs de commande (21) des dispositifs d'alarme (1) sont configurés pour fournir au moins trois opérations de charge différentes comportant :
une opération de conservation pour conserver le niveau de charge de l'unité de stockage d'énergie (5) ;
une opération régulière pour charger l'unité de stockage d'énergie (5) avec un courant de charge intermédiaire ;
une opération de charge rapide pour charger l'unité de stockage d'énergie (5) avec un courant de charge élevé ;
dans lequel l'opération de charge respective est déterminée par l'unité centrale de commande (Z).

12. Système d'alarme connecté à un bus selon la revendication 9, **caractérisé en ce que** le bus (3) est configuré sous forme de boucle fermée.

13. Système d'alarme connecté à un bus selon la revendication 9, **caractérisé en ce que** le bus (3) est en outre connecté à au moins l'un d'un détecteur de fumée, d'un détecteur d'intrusion, d'une caméra vidéo, d'une unité d'extinction d'incendie et d'un verrou électronique.
